# EUROPÄISCHE PATENTSCHRIFT

(11) **EP 4 368 567 B1**
(45) Veröffentlichungstag und Bekanntmachung des Hinweises auf die Patenterteilung: **20.08.2025**
(21) Anmeldenummer: 22206654.0
(22) Anmeldetag: 10.11.2022
(51) Int. Cl.: C01B 3/04

(54) **VORRICHTUNG UND VERFAHREN ZUR PARTIELLEN UMWANDLUNG VON AMMONIAK IN EIN WASSERSTOFFHALTIGES GASGEMISCH**
DEVICE AND METHOD FOR PARTIAL CONVERSION OF AMMONIA INTO A HYDROGEN-CONTAINING GAS MIXTURE
DISPOSITIF ET PROCÉDÉ DE CONVERSION PARTIELLE D'AMMONIAC EN UN MÉLANGE GAZEUX CONTENANT DE L'HYDROGÈNE

(43) Veröffentlichungstag der Anmeldung: 15.05.2024
(73) Patentinhaber: WS-Wärmeprozesstechnik GmbH, 71272 Renningen (DE)
(72) Erfinder: Wünning, Joachim A., 71229 Leonberg (DE); Wünning, Joachim G., 71229 Leonberg (DE)
(74) Vertreter: Patentanwälte Ruff, Wilhelm, Beier, Dauster & Partner mbB

(56) Entgegenhaltungen:
- EP-A1- 3 878 806
- CN-U- 217 458 828
- KR-A- 20220 093 960
- US-A1- 2005 037 244

## Beschreibung

### ANWENDUNGSGEBIET UND STAND DER TECHNIK

Die Erfindung betrifft eine Vorrichtung zur partiellen Umwandlung von Ammoniak in ein brennbares, wasserstoffhaltiges Gasgemisch.

Perspektivisch soll zumindest ein Teil der zum Zeitpunkt der Anmeldung eingesetzten fossilen Energieträger durch sogenannten grünen Wasserstoff ersetzt werden. Erzeugung und Verbrauch des grünen Wasserstoffs erfolgen dabei sowohl örtlich als auch räumlich getrennt. Da eine Handhabung, ein Transport und eine Speicherung von Ammoniak, bestehend aus Wasserstoff und Stickstoff, deutlich einfacher ist als ein Umgang mit Wasserstoff, wird Ammoniak zunehmend auch als kohlenstofffreier Energieträger für einen Transport von grünem Wasserstoff eingesetzt. Ammoniak kann zu diesem Zweck kostengünstig über große Entfernungen per Schiff oder Pipeline flüssig transportiert werden.

Aufgrund einer schlechten Zündfähigkeit kann Ammoniak jedoch nicht direkt als Brennstoff für Wärmeprozesse, Motoren, Gasturbinen oder andere Verbraucher verwendet werden. Für eine Verwendung ist daher eine Rückumwandlung in Wasserstoff bekannt.

Für die Rückumwandlung in Wasserstoff sind Vorrichtungen zur Spaltung von Ammoniak (üblicherweise als Ammoniak-Cracker bezeichnet) bekannt, die Ammoniak bei ca. 850°C in 75% H2 und 25% N2 aufspalten. Die Ammoniak-Cracker verwenden dafür beispielsweise einen Katalysator. Das erzeugte Spaltgas kann entweder direkt in Brennstoffzellen in Strom umgewandelt oder zu Wasserstoff aufbereitet werden, z.B. für eine Betankung von Busflotten, Lastwagen und Schiffen. In der Regel ist jedoch ein energetischer Aufwand für eine vollständige Umwandlung des Ammoniaks in Wasserstoff und Stickstoff für eine Verwendung des so erhaltenen Wasserstoffs als Brennstoffs zu hoch.

Aus EP 3 878 806 A1 ist ein Verfahren zur partiellen Umwandlung von Ammoniak in ein brennbares, wasserstoffhaltiges Gasgemisch bekannt, welches als Brennstoff zur Wärmeerzeugung oder in einer Wärme-Kraft-Maschine genutzt werden kann. Dazu wird eine Ammoniak-Luft-Mischung in einem katalytischen Reaktor derart umgesetzt, dass ein Teil des Ammoniaks zu Wasser und Stickstoff oxidiert wird, während der größere Teil des Ammoniaks in Wasserstoff und Stickstoff gespalten wird. Die für die Ammoniakspaltung benötigte Energie wird dabei durch die Oxidationsreaktion erhalten. Die Oxidation erfolgt an einem Oxidationskatalysator, die nachfolgende Spaltung des Ammoniaks an einem dazu geeigneten Spaltkatalysator. Durch das Verfahren soll es möglich sein, ein Produktgas mit einem Volumenanteil von bis zu ca. 50% an Wasserstoff sowie - bei zusätzlicher Abscheidung von Wasserdampf und Verwendung von Sauerstoff statt Luft - von bis zu 70% an Wasserstoff zu erzeugen.

CN 217 458 828 U offenbart eine Vorrichtung und ein Verfahren zur Spaltung von Ammoniak. Ammoniak wird in einem Verdampfer verdampft und in einen Spaltreaktor geleitet. Das Spaltgas enthaltend Wasserstoff wird hauptsächlich zu einem Wasserstoffverbraucher geleitet. Ein Teil des Wasserstoffs wird über ein Regulierventil einem Brenner zugeführt und mit Luft verbrannt. Das Regulierventil wird von einer Steuereinheit gesteuert. Der Brennerabgasausgang ist mit einem Wärmezuführungseingang des Spaltreaktors verbunden. Der Spaltreaktor umfasst ferner eine elektrische Heizung für einen Start-up Betrieb.

### AUFGABE UND LÖSUNG

Es ist eine Aufgabe der Erfindung, eine kompakte Vorrichtung und ein Verfahren zur partiellen Umwandlung von Ammoniak in ein brennbares, wasserstoffhaltiges Gasgemisch, welches als Brennstoff zur Wärmeerzeugung oder in einer Wärme-Kraft-Maschine genutzt werden kann, zu schaffen, welche einen hohen Wirkungsgrad aufweisen.

Gemäß einem ersten Aspekt wird eine Vorrichtung zur partiellen Umwandlung von Ammoniak in ein brennbares, wasserstoffhaltiges Gasgemisch mit einem Ammoniak-Anteil geschaffen, umfassend einen Reaktor und eine Brennkammer mit einem Zufuhranschluss für Luft oder Sauerstoff, wobei der Reaktor eingerichtet ist, um einen als Ausgangsstoff zugeführten Ammoniak teilweise bei einer Reaktionstemperatur von ca. 500°C bis ca. 900°C in Wasserstoff und Stickstoff zur Erzeugung des Gasgemischs aufzuspalten, wobei die Brennkammer mit einem Auslass des Reaktors derart verbunden ist, dass der Brennkammer ein Teil des aus dem Reaktor abströmenden Gasgemischs zuführbar ist, und wobei die Brennkammer eingerichtet ist, um den Teil des zugeführten Gasgemischs in der Brennkammer zu oxidieren, und wobei ein Auslass der Brennkammer in einer Zufuhr zu dem Reaktor für einen als Ausgangsstoff zugeführten Ammoniak mündet, sodass heißes Abgas der Brennkammer stromaufwärts des Reaktors mit dem als Ausgangsstoff zugeführten Ammoniak zu einem heißen Gemisch vermischbar und das heiße Gemisch dem Reaktor zuführbar ist.

In anderen Worten wird ein Teil des mittels des Reaktors erzeugten Gasgemischs (auch als Spaltgas bezeichnet) verbrannt, um ein so erzeugtes heißes Abgas als Energiequelle für die in dem Reaktor ablaufende endotherme Reaktion zur Spaltung des als Ausgangsstoff zugeführten Ammoniaks zu nutzen. Das bei der Verbrennung erzeugte heiße Abgas wird dabei nicht an die Umgebung abgeführt, sondern ebenfalls dem Reaktor zugeführt und dient ebenfalls als Energiequelle für die in dem Reaktor ablaufende partielle Spaltung des Ammoniaks unter Abkühlung des zugeführten heißen Gemischs. Aufgrund der in dem Reaktor ablaufende partielle Spaltung des Ammoniaks erfolgt beispielsweise eine Abkühlung des zugeführten heißen Gemischs um ca. 160 K.

Das erzeugte Spaltgas kann beispielsweise für eine Betankung von Busflotten, Lastwagen und Schiffen eingesetzt werden.

Dank einer Nutzung der Energie aus der Verbrennung eines Teils des erzeugten Gasgemischs kann auf eine indirekte Beheizung des Reaktor, die insbesondere bei hohen Leistungen bekannter Anlagen und/oder Verfahren einen erheblichen Aufwand bedeutet, zur Spaltung des als Ausgangsstoffs zugeführten Ammoniaks verzichtet werden. Bei einer geeigneten Prozessführung sind so in der Vorrichtung Wirkungsgrade von mindestens 90%, optimalerweise von mindestens 95% erreichbar.

Bei dem Reaktor handelt es sich in Ausgestaltungen um einen katalytischen Reaktor, beispielsweise um einen Reaktor mit einem Nickel-basierten Katalysator.

In einer Ausgestaltung ist vorgesehen, dass die Brennkammer ein Volumen aufweist, um eine Verweilzeit in der Brennkammer sicherzustellen, sodass ein zugeführter Sauerstoff umgesetzt wird, vorzugsweise vollständig umgesetzt wird, wobei die Verweilzeit vorzugsweise mindestens 10ms beträgt. In anderen Worten weist die Brennkammer ein ausreichendes Volumen auf, sodass sichergestellt ist, dass auch ein Anteil an Ammoniak des in dem mittels des Reaktors erzeugten und der Brennkammer zugeführten Gasgemischs oxidiert wird.

In einer Ausgestaltung ist eine erste Steuereinrichtung vorgesehen, mittels der ein Gasgemisch/Luft-Verhältnis zu der Brennkammer unterstöchiometrisch einstellbar ist. Mittels einer Prozessführung in der Brennkammer mit einem unterstöchiometrischen Gasgemisch/LuftVerhältnis kann eine Bildung von Schadstoffen, wie z.B. NOx, reduziert werden. In einer Ausgestaltung wird zu diesem Zweck zumindest ein Sauerstoffgehalt in dem Teil des der Brennkammer zugeführten Gasgemischs überwacht und eine Luft- und/oder Sauerstoffzufuhr an den Sauerstoffgehalt angepasst.

Die Begriffe "erste", "erster", etc. sowie "zweite", "zweiter", "dritte" etc. dienen im Zusammenhang mit der Anmeldung lediglich zur Unterscheidung unterschiedlicher Bauteile und soll keine Reihenfolge angeben. Ebenso verlangt die Verwendung des Begriffs "erste" etc. nicht das Vorhandensein eines separaten zweiten Bauteils.

In einer Ausgestaltung ist als gemeinsame Baueinheit mit der ersten Steuereinrichtung oder alternativ oder zusätzlich zu der ersten Steuereinrichtung eine zweite Steuereinrichtung vorgesehen, die eingerichtet ist, um einen Heizwert des erzeugten Gasgemischs bei einer Änderung eines Bedarfs des Gasgemischs zumindest im Wesentlichen konstant zu halten, wobei mittels der Steuereinrichtung bei einer Änderung eines Bedarfs des Gasgemischs eine Ammoniak-Menge des als Ausgangsstoff zugeführten Ammoniaks, eine der Brennkammer zugeführten Gasgemisch-Menge und/oder eine der Brennkammer zugeführte Luft- oder Sauerstoff-Menge proportional einstellbar sind. Jeweilige Mengen sind beispielsweise mittels geeigneter Mengenregler situativ einstellbar. Dadurch ist eine schnelle Anpassung einer Menge eines erzeugten Gasgemischs bei gleichbleibendem Heizwert des Gasgemischs möglich. Beispielsweise kann eine Menge des erzeugten Gasgemischs an einen veränderten Bedarf eines das erzeugte Gasgemisch unmittelbar umsetzenden Verbrauchers angepasst werden, wobei gleichzeitig eine Versorgung des Verbrauchers mit einem definierten Heizwert des zugeführten Gasgemischs sichergestellt ist.

In einer Ausgestaltung der Vorrichtung ist ein Wärmetauscher vorgesehen, wobei das als Ausgangsstoff zugeführte Ammoniak vor einer Vermischung mit dem heißen Abgas mittels des aus dem Reaktor abströmenden Gasgemischs in dem Wärmetauscher erwärmbar ist. Sofern der als Ausgangsstoff zugeführte Ammoniak in flüssiger Form zugeführt wird, dient der Wärmetauscher in Ausgestaltungen auch als Verdampfer. Der Wärmetauscher ist beispielsweise als Flachrohrwärmetaucher gestaltet, wie er beispielsweise - jedoch nicht beschränkend - aus EP 2 584 301 A1 bekannt ist. Flachrohrwärmetauscher zeichnen sich durch ihre hohe volumetrische Flächendichte aus. Je nach Gestaltung der Vorrichtung wird dabei das gesamte aus dem Reaktor abgeführte Gasgemisch oder lediglich ein Anteil des aus dem Reaktor abgeführten Gasgemischs über den Wärmetauscher geführt. In einer Ausgestaltung wird ein nicht der Brennkammer zugeführter Teil des Gasgemischs dem Wärmetauscher zugeführt, sodass dieser Teil für eine Erwärmung des als Ausgangsstoffs zugeführten Ammoniaks genutzt wird. In anderen Ausgestaltungen wird ein der Brennkammer zugeführter Teil des Gasgemischs stromaufwärts der Brennkammer dem Wärmetauscher für eine Erwärmung des als Ausgangsstoffs zugeführten Ammoniaks zugeführt.

In einer Ausgestaltung erfolgt mittels einer dritten Steuereinrichtung eine Prozessführung derart, dass der Teil des aus dem Reaktor abströmenden Gasgemischs, welcher der Brennkammer zugeführt ist, maximal 10% des abströmenden Gasgemischs beträgt.

Wie analog bereits oben ausgeführt, verlangt die Verwendung des Begriffs "dritter" nicht das Vorhandensein eines separaten ersten und/oder zweiten Bauteils ähnlicher oder gleicher Bauart. In vorteilhaften Ausgestaltungen ist eine Steuereinrichtung und/oder sind mehrere Steuereinrichtungen der Vorrichtung jedoch gestaltet, sodass mittels der einen oder der mehreren Steuereinrichtungen eine Prozessführung derart erfolgt, dass der Teil des aus dem Reaktor abströmenden Gasgemischs, welcher der Brennkammer zugeführt ist, unabhängig von einem Lastfall eines Verbrauchers des erzeugten Gasgemischs maximal 10% des abströmenden Gasgemischs beträgt, wobei zumindest eine Ammoniak-Menge an einen veränderten Lastfall angepasst wird.

Beispielsweise soll in einer Ausgestaltung mindestens 25% des als Ausgangsstoffs zugeführten Ammoniaks gespalten werden, wobei zu diesem Zweck eine Prozessführung derart erfolgt, dass ca. 7% des erzeugten Gasgemischs mit einer Luftmenge von ca. 0,25 m3 je m3 des als Ausgangsstoffs zugeführten Ammoniak in der Brennkammer verbrannt wird.

Für eine gute Durchmischung des als Ausgangsstoffs zugeführten Ammoniaks mit dem heißen Abgas ist in einer Ausgestaltung vorgesehen, dass der Auslass der Brennkammer eine Vielzahl an Auslassdüsen aufweist.

In einer Ausgestaltung ist eine Elektroheizung vorgesehen, wobei die Elektroheizung eingerichtet ist, um den Reaktor und/oder das als Ausgangsstoff zugeführte Ammoniak stromaufwärts des Reaktors in einem Start- und Standby-Betrieb und/oder für einen Hybridbetrieb zu erwärmen. Als Hybridbetrieb wird ein Betrieb bezeichnet, bei welchem basierend auf zu definierenden Randbedingungen wahlweise die für die Spaltung notwendigen Reaktionstemperaturen durch Verbrennung eines Teils des erzeugten Gasgemischs oder mittels der Elektroheizung erzielt werden. Beispielsweise ist in einer Ausgestaltung vorgesehen, dass eine Erwärmung des als Ausgangsstoff zugeführten Ammoniaks und/oder des Reaktors mittels der Elektroheizung in Zeiten erfolgt, in welchen ein günstiger Überschussstrom zur Verfügung steht.

In einer Ausgestaltung ist vorgesehen, dass ein Gehäuse der Brennkammer aus einem keramischen Material besteht und/oder eine keramische Beschichtung aufweist. Keramik zeichnet sich durch eine geringe Korrosionsanfälligkeit aus.

Alternativ oder zusätzlich ist in einer Ausgestaltung vorgesehen, dass die Brennkammer und/oder der Reaktor für einen Betrieb bei Überdruck ausgelegt sind.

Alternativ oder zusätzlich ist in einer Ausgestaltung vorgesehen, dass in einer Zufuhr für den Brennkammer ein Injektor vorgesehen ist, der eingerichtet ist, um das Gasgemisch zu der Brennkammer mittels der zugeführten Luft bzw. dem zugeführten Sauerstoff anzusaugen.

Gemäß einem zweiten Aspekt wird ein Verfahren zur partiellen Umwandlung von Ammoniak in ein brennbares, wasserstoffhaltiges Gasgemisch mit einem Ammoniak-Anteil geschaffen, wobei Ammoniak mittels eines Reaktors teilweise bei einer Reaktionstemperatur von ca. 500°C bis ca. 900°C in Wasserstoff und Stickstoff zur Erzeugung des Gasgemischs aufgespalten wird, wobei in einer Brennkammer ein Teil des aus dem Reaktor abströmenden Gasgemischs mit Luft oder Sauerstoff oxidiert wird, wobei ein heißes Abgas der Brennkammer stromaufwärts des Reaktors mit dem als Ausgangsstoff zugeführten Ammoniak zu einem heißen Gemisch vermischt wird und wobei das heiße Gemisch dem Reaktor zugeführt wird.

Eine Verweilzeit in der Brennkammer wird in einer Ausgestaltung derart gewählt, dass ein der Brennkammer zugeführter Sauerstoff umgesetzt, vorzugsweise vollständig umgesetzt wird, wobei eine Verweilzeit vorzugsweise mindestens 10 ms beträgt.

Um insbesondere bei einer Verwendung von Luft für die Oxidation in der Brennkammer eine Bildung von Schadstoffen, wie z.B. NOx, zu reduzieren, wird in einer Ausgestaltung ein Gasgemisch/Luft-Verhältnis zu der Brennkammer unterstöchiometrisch eingestellt.

In einer Ausgestaltung wird Heizwert des erzeugten Gasgemischs für eine Nutzung des Gasgemischs als Brenngas in einem Verbraucher zumindest im Wesentlichen konstant gehalten. Um eine Nutzung unmittelbar an einem Verbraucher mit schnellen Lastwechseln zu ermöglichen, werden in einer Ausgestaltung bei einer Änderung eines Bedarfs des Gasgemischs eine Ammoniak-Menge des als Ausgangsstoff zugeführten Ammoniaks, eine der Brennkammer zugeführten Gasgemisch-Menge und/oder eine der Brennkammer zugeführten Luft- oder Sauerstoff-Menge proportional eingestellt.

In einer Ausgestaltung wird das als Ausgangsstoff zugeführte Ammoniak vor einer Vermischung mit dem heißen Abgas mittels des aus dem Reaktor abströmenden Gasgemischs erwärmt. Ein Erwärmen erfolgt in einer Ausgestaltung indirekt mittels eines Flachrohrwärmetauscher mit hoher volumetrischer Flächendichte.

Für eine geeignete Prozessführung ist in Ausgestaltungen des Verfahrens vorgesehen, dass der Teil des aus dem Reaktor abströmenden Gasgemischs, welcher der Brennkammer zugeführt wird, maximal 10% des abströmenden Gasgemischs beträgt.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgenden anhand der Figuren erläutert sind. Dabei zeigen:
- Fig. 1: ein verfahrenstechnisches Fließbild eines Verfahrens zur partiellen Umwandlung von Ammoniak in ein brennbares, wasserstoffhaltiges Gasgemisch;
- Fig. 2: eine schematische Darstellung eines ersten Ausführungsbeispiels einer Vorrichtung zur partiellen Umwandlung von Ammoniak in ein brennbares, wasserstoffhaltiges Gasgemisch, und
- Fig. 3: eine schematische Darstellung eines zweiten Ausführungsbeispiels einer Vorrichtung zur partiellen Umwandlung von Ammoniak in ein brennbares, wasserstoffhaltiges Gasgemisch,

### DETAILLIERTE BESCHREIBUNG DER AUSFÜHRUNGSBEISPIELE

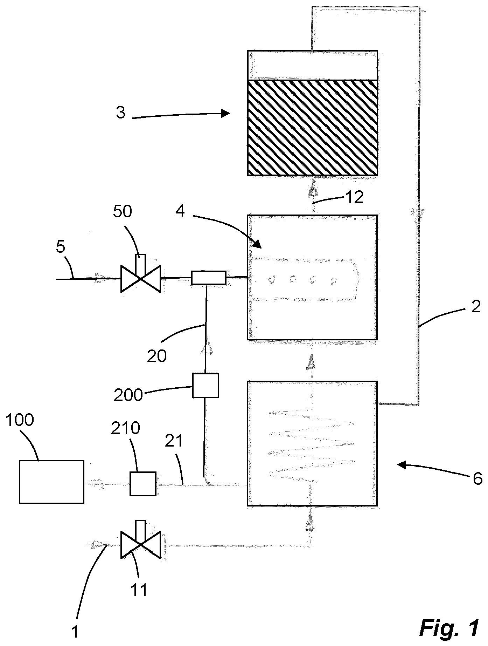

Fig. 1 zeigt ein verfahrenstechnisches Fließbild eines Verfahrens zur partiellen Umwandlung von einem als Ausgangsstoff zugeführten Ammoniak 1 in ein brennbares, wasserstoffhaltiges Gasgemisch 2. Das Gasgemisch 2 dient beispielsweise als Brennstoff in einem schematisch dargestellten Verbraucher 100, beispielsweise einer Heizung oder einem Motor, beispielsweise auf einem Schiff.

Der als Ausgangsstoff zugeführte Ammoniak 1 wird in einem Reaktor 3 bei einer Reaktionstemperatur von ca. 500°C bis ca. 900°C teilweise in Wasserstoff und Stickstoff zur Erzeugung des Gasgemischs 2 aufgespalten.

Die für die partielle Umwandlung des Ammoniaks 1 benötigte Wärme wird mittels einer Brennkammer 4 erzeugt, wobei ein Teil 20 des aus dem Reaktor abströmenden Gasgemischs 2 sowie Luft oder Sauerstoff 5 der Brennkammer 4 zugeführt werden und das Gasgemisch in der Brennkammer 4 oxidiert wird.

Ein heißes Abgas der Brennkammer 4 wird stromaufwärts des Reaktors 3 mit dem als Ausgangsstoff zugeführten Ammoniak 1 zu einem heißen Gemisch 12 vermischt wird und das heiße Gemisch 12 wird dem Reaktor 3 zugeführt.

Die notwendige Energie für die Spaltung des in dem heißen Gemisch 12 vorhandenen Ammoniaks in dem Reaktor 3 wird durch eine Abkühlung der Gase des Gemischs 12 bereitgestellt, sodass im Betrieb auf eine indirekte Beheizung des Reaktors 3 verzichtet werden kann.

Bei dem in Fig. 1 dargestellten Verfahren wird zudem der als Ausgangsstoff zugeführte Ammoniak 1 vor einer Vermischung mit dem Abgas aus der Brennkammer 4 mittels des Gasgemischs 2 in einem Wärmetauscher 6 erwärmt.

Ein Bedarf des Gasgemisch 2 des Verbrauchers ist je nach Art und Einsatzgebiets des Verbrauchers 100 variabel. In dem dargestellten Ausführungsbeispiel ist in einer Zufuhr des als Ausgangsstoffs zugeführten Ammoniaks 1 ein Mengenregler 11 vorgesehen, wobei bei einer Änderung des Bedarfs des Verbrauchers 100 eine Ammoniak-Menge des als Ausgangsstoff zugeführten Ammoniaks 1 angepasst werden kann. Um einen Heizwert des erzeugten Gasgemischs 2 auch bei einer Änderung des Bedarfs des Verbrauchers 100 und einer daran angepassten veränderten Ammoniak-Menge zumindest im Wesentlichen konstant zu halten, wird eine der Brennkammer 4 zugeführte Luft- oder Sauerstoff-Menge mittels eines Mengenreglers 50 proportional zu der Ammoniak-Menge eingestellt.

In einer Zuführleitung des Teils 20 des erzeugten Gasgemischs 2 zu der Brennkammer 4 ist eine Messeinrichtung 200 vorgesehen, wobei mittels der Messeinrichtung 200 je nach Ausgestaltung eine zugeführte Gasgemisch-Menge und/oder eine Qualität des zugeführten Gasgemischs überwachbar ist.

Ebenso ist in einer Leitung des Teils 21 des erzeugten Gasgemischs 2, der nicht der Brennkammer 4 zugeführt wird, eine Messeinrichtung 210 vorgesehen, wobei mittels der Messeinrichtung 210 je nach Ausgestaltung eine zugeführte Gasgemisch-Menge und/oder eine Qualität des zugeführten Gasgemischs überwachbar ist.

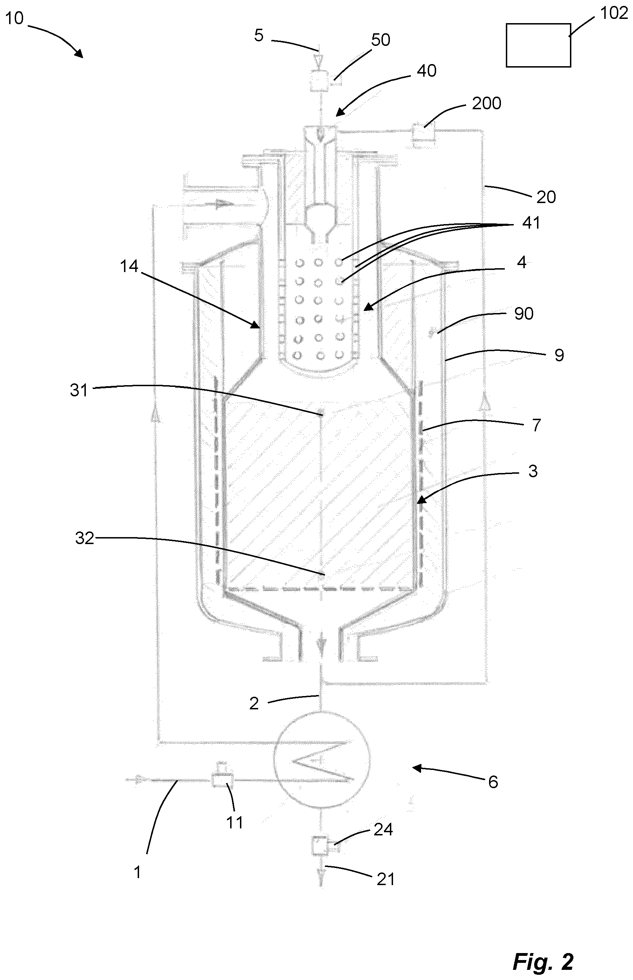

Fig. 2 zeigt eine schematische Darstellung eines ersten Ausführungsbeispiels einer Vorrichtung 10 zur partiellen Umwandlung eines als Ausgangsstoff zugeführten Ammoniaks 1 in ein brennbares, wasserstoffhaltiges Gasgemisch 2 mit einem Ammoniak-Anteil. Die Vorrichtung 10 umfasst einen Reaktor 3 und eine Brennkammer 4.

Mittels des Reaktor 3 kann der als Ausgangsstoff zugeführten Ammoniak 1 teilweise bei einer Reaktionstemperatur von ca. 500°C bis ca. 900°C in Wasserstoff und Stickstoff zur Erzeugung des Gasgemischs 2 aufgespaltet werden. Bei dem dargestellten Reaktor 3 handelt es sich um einen katalytischen Reaktor, es sind jedoch auch Reaktoren ohne Katalysator denkbar.

Die Brennkammer 4 ist mit einem Auslass des Reaktors 3 derart verbunden, dass der Brennkammer 4 ein Teil 20 des aus dem Reaktor 3 abströmenden Gasgemischs 2 zugeführt wird. Die Brennkammer 4 weist einen Zufuhranschluss 40 für Luft oder Sauerstoff auf, wobei der Zufuhranschluss 40 als Injektor gestaltet ist, sodass mittels der zugeführten Luft bzw. mittels des zugeführten Sauerstoffs das Gasgemisch angesaugt und der Brennkammer 4 zugeführt wird. In der Brennkammer 4 wird das zugeführte Gasgemisch 2 verbrannt. Die Brennkammer 4 ist dabei derart dimensioniert, dass eine Verweilzeit in der Brennkammer 4 ausreichend ist, um eine vollständige Umsetzung des zugeführten Sauerstoffs sicherzustellen.

Die Brennkammer 4 ist in dem dargestellten Ausführungsbeispiel in einem Zufuhrkanal 14 für den als Ausgangsstoff zugeführten Ammoniak 1 zu dem Reaktor 3 angeordnet, wobei der Zufuhrkanal 14 die Brennkammer 4 umgibt. Die Brennkammer 4 weist eine Vielzahl an Auslassdüsen 41 auf, über welche ein Abgas der Verbrennung in den Zufuhrkanal 14 geleitet wird, sodass heißes Abgas der Brennkammer 4 stromaufwärts des Reaktors 3 mit dem als Ausgangsstoff zugeführten Ammoniak 1 zu einem heißen Gemisch vermischt wird und das heiße Gemisch dem Reaktor 3 zugeführt wird.

Eine für die Spaltung des dem Reaktor 3 zugeführten Ammoniaks 1 notwendige Energie kann dabei durch eine Abkühlung des heißen Gemischs in dem Reaktor 3 gewonnen werden.

In dem dargestellten Ausführungsbeispiel ist zudem ein Wärmetauscher 6 vorgesehen. Mittels des Wärmetauschers 6 wird in dem Ausführungsbeispiel der als Ausgangsstoff zugeführte Ammoniak 1 durch einen Teil 21 des erzeugten Gasgemischs 2, der nicht der Brennkammer 4 zugeführt wird, erwärmt.

In dem dargestellten Ausführungsbeispiel ist zudem eine Elektroheizung 7 vorgesehen, mittels welcher der Reaktor 3 bei einem Start- oder Standby-Betrieb beheizbar ist.

Um den Reaktor 3 und die Brennkammer 4 ist ein druckfester Behälter 9 mit einer Isolierung 90 vorgesehen. Bei entsprechender Gestaltung der Isolierung 90 können Wandverluste deutlich unter 1 % gehalten werden.

In dem dargestellten Ausführungsbeispiel ist in einer Leitung des Teils 21 des erzeugten Gasgemischs 2, der nicht der Brennkammer 4 zugeführt wird, ein Mengenregler 24 vorgesehen. Mittels des Mengenreglers 24 ist einstellbar, wieviel Prozent des abströmenden Gasgemischs 2 der Brennkammer 4 zugeführt werden soll. Für eine geeignete Prozessführung erfolgt eine Einstellung in Ausgestaltungen derart, dass der Teil 20 des aus dem Reaktor abströmenden Gasgemischs 2, welcher der Brennkammer 4 zugeführt wird, maximal 10% des abströmenden Gasgemischs 2 beträgt.

Um ein Volumen des erzeugten Gasgemischs 2 zu variieren, ist in einer Zuführleitung des als Ausgangsstoffs zugeführten Ammoniaks 1 ein Mengenregler 11 vorgesehen. Weiter ist in einer Zufuhrleitung für Luft bzw. Sauerstoff 5 ein Mengenregler 50 vorgesehen.

Um einen Heizwert des mittels des Reaktors 3 erzeugten Gasgemischs 2 bei einer Änderung eines Bedarfs des Gasgemischs 2 zumindest im Wesentlichen konstant zu halten, werden eine Menge des als Ausgangsstoff zugeführten Ammoniaks 1, eine der Brennkammer 4 zugeführte Gasgemisch-Menge und eine der Brennkammer 4 zugeführte Luft- oder Sauerstoff-Menge proportional zueinander eingestellt.

In einer Zuführleitung des Teils 20 des erzeugten Gasgemischs 2 zu der Brennkammer 4 ist eine Messeinrichtung 200 vorgesehen, wobei mittels der Messeinrichtung 200 je nach Ausgestaltung eine zugeführte Gasgemisch-Menge und/oder eine Qualität des zugeführten Gasgemischs überwachbar ist.

Eine Prozessführung ist in Ausgestaltungen mittels einer schematisch dargestellten Steuereinrichtung 102 überwachbar und/oder regelbar. Für eine Überwachung sind in einer Ausgestaltung zusätzlich Temperatursensoren 31, 32 vorgesehen. Mittels der Temperatursensoren 31, 32 sind Temperaturen am Eingang und am Ausgang des Reaktors 3 messbar.

Ein Bauvolumen für die Brennkammer 4 und den Reaktor 3 kann sehr kompakt gehalten werden.

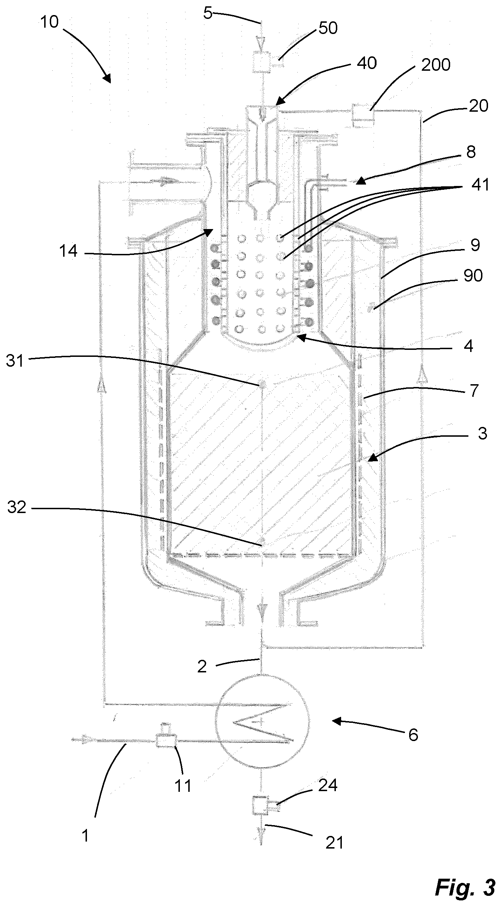

Fig. 3 zeigt eine schematische Darstellung eines zweiten Ausführungsbeispiels einer Vorrichtung 10 zur partiellen Umwandlung eines als Ausgangsstoff zugeführten Ammoniaks 1 in ein brennbares, wasserstoffhaltiges Gasgemisch 2 mit einem Ammoniak-Anteil. Die Vorrichtung 10 gemäß Fig. 3 entspricht größtenteils der Vorrichtung 10 gemäß Fig. 2 und für gleiche Bauteile werden gleiche Bezugszeichen verwendet. Für eine Beschreibung dieser Bauteile wird auf oben verwiesen.

Im Unterscheid zu der Gestaltung gemäß Fig. 2 umfasst die Vorrichtung gemäß Fig. 3 zusätzlich eine um die Brennkammer 4 im Zufuhrkanal 14 des als Ausgangsstoff zugeführten Ammoniaks 1 angeordnete Elektroheizung 8, welche beispielsweise als Heizwendel gestaltet ist. Mittels der zusätzlichen Elektroheizung 8 ist der als Ausgangsstoff zugeführte Ammoniak 1 vor einer Zufuhr zu dem Reaktor 3 beheizbar. Die zusätzliche Elektroheizung 8 erlaubt so einen Hybridbetrieb der Vorrichtung 10, wobei wahlweise eine Erwärmung des als Ausgangsstoff zugeführten Ammoniaks 1 durch Verbrennung oder mittels der Elektroheizung 8 erfolgt.

## Patentansprüche

1. Vorrichtung zur partiellen Umwandlung von Ammoniak in ein brennbares, wasserstoffhaltiges Gasgemisch (2) mit einem Ammoniak-Anteil, umfassend einen Reaktor (3), wobei der Reaktor eingerichtet ist, um einen als Ausgangsstoff zugeführten Ammoniak (1) teilweise bei einer Reaktionstemperatur von 500°C bis 900°C in Wasserstoff und Stickstoff zur Erzeugung des Gasgemischs (2) aufzuspalten,
**dadurch gekennzeichnet, dass** die Vorrichtung (10) weiter eine Brennkammer (4) mit einem Zufuhranschluss (40) für Luft oder Sauerstoff umfasst, wobei die Brennkammer (4) mit einem Auslass des Reaktors (3) derart verbunden ist, dass der Brennkammer (4) ein Teil (20) des aus dem Reaktor (3) abströmenden Gasgemischs (2) zuführbar ist, wobei die Brennkammer (4) eingerichtet ist, um den Teil (20) des zugeführten Gasgemischs (2) in der Brennkammer (4) zu oxidieren, und wobei ein Auslass der Brennkammer (4) in einer Zufuhr zu dem Reaktor (3) für den als Ausgangsstoff zugeführten Ammoniak (1) mündet, sodass heißes Abgas der Brennkammer (4) stromaufwärts des Reaktors (3) mit dem als Ausgangsstoff zugeführten Ammoniak (1) zu einem heißen Gemisch (12) vermischbar und das heiße Gemisch (12) dem Reaktor (3) zuführbar ist.

2. Vorrichtung nach Anspruch 1, **dadurch gekennzeichnet, dass** die Brennkammer (4) ein Volumen aufweist, um eine Verweilzeit in der Brennkammer (4) sicherzustellen, sodass ein zugeführter Sauerstoff umgesetzt wird, wobei die Verweilzeit vorzugsweise mindestens 10ms beträgt.

3. Vorrichtung nach Anspruch 1 oder 2, **dadurch gekennzeichnet, dass** eine erste Steuereinrichtung vorgesehen ist, mittels der ein Gasgemisch/Luft-Verhältnis zu der Brennkammer (4) unterstöchiometrisch einstellbar ist.

4. Vorrichtung nach Anspruch 1, 2 oder 3, **dadurch gekennzeichnet, dass** eine zweite Steuereinrichtung vorgesehen ist, die eingerichtet ist, um einen Heizwert des mittels des Reaktors (3) erzeugten Gasgemischs (2) bei einer Änderung eines Bedarfs des Gasgemischs (2) zumindest im Wesentlichen konstant zu halten, wobei mittels der Steuereinrichtung bei einer Änderung eines Bedarfs des Gasgemischs (2) eine Ammoniak-Menge des als Ausgangsstoff zugeführten Ammoniaks (1), eine der Brennkammer (4) zugeführten Gasgemisch-Menge und/oder eine der Brennkammer (4) zugeführte Luft- oder Sauerstoff-Menge proportional einstellbar sind.

5. Vorrichtung nach einem der Ansprüche 1 bis 4, **dadurch gekennzeichnet, dass** ein Wärmetauscher (6) vorgesehen ist, wobei das als Ausgangsstoff zugeführte Ammoniak (1) vor einer Vermischung mit dem heißen Abgas mittels des aus dem Reaktor (3) abströmenden Gasgemischs (2) in dem Wärmetauscher (6) erwärmbar ist.

6. Vorrichtung nach einem der Ansprüche 1 bis 5, **dadurch gekennzeichnet, dass** mittels einer dritten Steuereinrichtung eine Prozessführung erfolgt, so dass der Teil (20) des aus dem Reaktor abströmenden Gasgemischs (2), welcher der Brennkammer (4) zugeführt ist, maximal 10% des abströmenden Gasgemischs (2) beträgt.

7. Vorrichtung nach einem der Ansprüche 1 bis 6, **dadurch gekennzeichnet, dass** der Auslass der Brennkammer (4) eine Vielzahl an Auslassdüsen (41) aufweist.

8. Vorrichtung nach einem der Ansprüche 1 bis 7, **dadurch gekennzeichnet, dass** eine Elektroheizung (7, 8) vorgesehen ist, wobei die Elektroheizung (7, 8) eingerichtet ist, um den Reaktor (3) und/oder das als Ausgangsstoff zugeführte Ammoniak (1) stromaufwärts des Reaktors (3) in einem Start- und Standby-Betrieb und/oder für einen Hybridbetrieb zu erwärmen.

9. Vorrichtung nach einem der Ansprüche 1 bis 8, **dadurch gekennzeichnet, dass** ein Gehäuse (42) der Brennkammer (4) aus einem keramischen Material besteht und/oder das Gehäuse (42) der Brennkammer (4) eine keramische Beschichtung aufweist und/oder dass die Brennkammer (4) und/oder der Reaktor (3) für einen Betrieb bei Überdruck ausgelegt sind und/oder dass in einer Zufuhr für den Brennkammer ein Injektor vorgesehen ist, der eingerichtet ist, um das Gasgemisch zu dem Brennkammer mittels der zugeführten Luft bzw. dem zugeführten Sauerstoff anzusaugen.

10. Verfahren zur partiellen Umwandlung von Ammoniak in ein brennbares, wasserstoffhaltiges Gasgemisch (2) mit einem Ammoniak-Anteil, wobei ein als Ausgangsstoff zugeführter Ammoniak (1) mittels eines Reaktors (3) teilweise bei einer Reaktionstemperatur von 500°C bis 900°C in Wasserstoff und Stickstoff zur Erzeugung des Gasgemischs (2) aufgespalten wird,
**dadurch gekennzeichnet, dass** in einer Brennkammer (4) ein Teil (20) des aus dem Reaktor (3) abströmenden Gasgemischs (2) mit Luft oder Sauerstoff oxidiert wird, ein heißes Abgas der Brennkammer (4) stromaufwärts des Reaktors (3) mit dem als Ausgangsstoff zugeführten Ammoniak (1) zu einem heißen Gemisch vermischt wird und das heiße Gemisch dem Reaktor (3) zugeführt wird.

11. Verfahren nach Anspruch 10, **dadurch gekennzeichnet, dass** eine Verweilzeit in der Brennkammer (4) so gewählt wird, dass ein der der Brennkammer (4) zugeführter Sauerstoff umgesetzt, vorzugsweise vollständig umgesetzt, wird, wobei eine Verweilzeit vorzugsweise mindestens 10 ms beträgt.

12. Verfahren nach Anspruch 10 oder 11, **dadurch gekennzeichnet, dass** ein Gasgemisch/Luft-Verhältnis zu der Brennkammer unterstöchiometrisch eingestellt wird.

13. Verfahren nach Anspruch 10, 11 oder 12, **dadurch gekennzeichnet, dass** ein Heizwert des erzeugten Gasgemischs (2) zumindest im Wesentlichen konstant gehalten wird, wobei bei einer Änderung eines Bedarfs des Gasgemischs (2) eine Ammoniak-Menge des als Ausgangsstoff zugeführten Ammoniaks (1), eine der Brennkammer (4) zugeführten Gasgemisch-Menge und/oder eine der Brennkammer (4) zugeführten Luft- oder Sauerstoff-Menge proportional eingestellt werden.

14. Verfahren nach einem der Ansprüche 10 bis 13, **dadurch gekennzeichnet, dass** das als Ausgangsstoff zugeführte Ammoniak (1) vor einer Vermischung mit dem heißen Abgas mittels des aus dem Reaktor (3) abströmenden Gasgemischs (2) erwärmt wird.

15. Verfahren nach einem der Ansprüche 10 bis 14, **dadurch gekennzeichnet, dass** der Teil (20) des aus dem Reaktor (3) abströmenden Gasgemischs (2), welcher der Brennkammer (4) zugeführt wird, maximal 10% des abströmenden Gasgemischs beträgt.

## Claims

1. Device for partial conversion of ammonia into a combustible, hydrogen-containing gas mixture (2) with an ammonia fraction, comprising a reactor (3), wherein the reactor is configured to partially crack ammonia (1), supplied as a starting material, at a reaction temperature of 500°C to 900°C into hydrogen and nitrogen in order to generate the gas mixture (2),
**characterized in that** the device (10) further comprises a combustion chamber (4) with a supply connection (40) for air or oxygen, wherein the combustion chamber (4) is connected to an outlet of the reactor (3) in such a way that part (20) of the gas mixture (2) flowing out of the reactor (3) can be supplied to the combustion chamber (4), wherein the combustion chamber (4) is configured to oxidize the part (20) of the supplied gas mixture (2) in the combustion chamber (4), and wherein an outlet of the combustion chamber (4) opens out in a supply to the reactor (3) for the ammonia (1) supplied as a starting material, so that hot exhaust gas of the combustion chamber (4) upstream of the reactor (3) can be mixed with the ammonia (1) supplied as the starting material to form a hot mixture (12) and the hot mixture (12) can be supplied to the reactor (3).

2. Device according to Claim 1, **characterized in that** the combustion chamber (4) has a volume to ensure a dwell time in the combustion chamber (4) such that supplied oxygen is converted, wherein the dwell time is preferably at least 10 ms.

3. Device according to Claim 1 or 2, **characterized in that** a first control device is provided, by means of which a gas-mixture/air ratio to the combustion chamber (4) can be set to be substoichiometric.

4. Device according to Claim 1, 2 or 3, **characterized in that** a second control device is provided, which is configured to keep a calorific value of the gas mixture (2) generated by means of the reactor (3) at least substantially constant when there is a change in a demand for the gas mixture (2), wherein an amount of ammonia of the ammonia (1) supplied as the starting material, an amount of gas mixture supplied to the combustion chamber (4) and/or an amount of air or oxygen supplied to the combustion chamber (4) can be set proportionally by means of the control device when there is a change in a demand for the gas mixture (2).

5. Device according to one of Claims 1 to 4, **characterized in that** a heat exchanger (6) is provided, wherein the ammonia (1) supplied as a starting material can be heated in the heat exchanger (6) before mixing with the hot exhaust gas by means of the gas mixture (2) flowing out of the reactor (3).

6. Device according to one of Claims 1 to 5, **characterized in that** process management is performed by means of a third control device, so that the part (20) of the gas mixture (2) flowing out of the reactor that is supplied to the combustion chamber (4) is a maximum of 10% of the gas mixture (2) flowing out.

7. Device according to one of Claims 1 to 6, **characterized in that** the outlet of the combustion chamber (4) has a multiplicity of outlet nozzles (41).

8. Device according to one of Claims 1 to 7, **characterized in that** an electric heater (7, 8) is provided, wherein the electric heater (7, 8) is configured to heat the reactor (3) and/or the ammonia (1) supplied as a starting material upstream of the reactor (3) in a starting and standby mode and/or for a hybrid mode.

9. Device according to one of Claims 1 to 8, **characterized in that** the housing (42) of the combustion chamber (4) consists of a ceramic material and/or the housing (42) of the combustion chamber (4) has a ceramic coating and/or **in that** the combustion chamber (4) and/or the reactor (3) is configured for operation at positive pressure and/or **in that** an injector which is configured to aspirate the gas mixture to the combustion chamber by means of the supplied air or the supplied oxygen is provided in a supply for the combustion chamber.

10. Method for partially converting ammonia into a combustible, hydrogen-containing gas mixture (2) with an ammonia fraction, wherein an ammonia (1), supplied as a starting material, is partially cracked at a reaction temperature of 500°C to 900°C into hydrogen and nitrogen by means of a reactor (3) in order to generate the gas mixture (2),
**characterized in that**, in a combustion chamber (4), a part (20) of the gas mixture (2) flowing out of the reactor (3) is oxidized with air or oxygen, a hot exhaust gas of the combustion chamber (4) upstream of the reactor (3) is mixed with the ammonia (1) supplied as a starting material to form a hot mixture and the hot mixture is supplied to the reactor (3).

11. Method according to Claim 10, **characterized in that** a dwell time in the combustion chamber (4) is chosen such that an oxygen supplied to the combustion chamber (4) is converted, preferably completely converted, wherein a dwell time is preferably at least 10 ms.

12. Method according to Claim 10 or 11, **characterized in that** a gas-mixture/air ratio to the combustion chamber is set to be substoichiometric.

13. Method according to Claim 10, 11 or 12, **characterized in that** a calorific value of the gas mixture (2) generated is kept at least substantially constant, wherein an amount of ammonia of the ammonia (1) supplied as the starting material, an amount of gas mixture supplied to the combustion chamber (4) and/or an amount of air or oxygen supplied to the combustion chamber (4) are set proportionally when there is a change in a demand for the gas mixture (2).

14. Method according to one of Claims 10 to 13, **characterized in that** the ammonia (1) supplied as a starting material is heated before mixing with the hot exhaust gas by means of the gas mixture (2) flowing out of the reactor (3).

15. Method according to one of Claims 10 to 14, **characterized in that** the part (20) of the gas mixture (2) flowing out of the reactor (3) that is supplied to the combustion chamber (4) is a maximum of 10% of the gas mixture flowing out.

## Revendications

1. Dispositif pour la conversion partielle d'ammoniac en un mélange gazeux (2) combustible, contenant de l'hydrogène, avec une proportion d'ammoniac, comprenant un réacteur (3), le réacteur étant adapté pour décomposer partiellement, à une température de réaction de 500 °C à 900 °C, un ammoniac (1) amené en tant que matière première en hydrogène et en azote pour produire le mélange gazeux (2),
**caractérisé en ce que** le dispositif (10) comprend en outre une chambre de combustion (4) avec un raccord d'amenée (40) pour de l'air ou de l'oxygène, la chambre de combustion (4) étant reliée à une sortie du réacteur (3) de telle sorte qu'une partie (20) du mélange gazeux (2) s'écoulant du réacteur (3) peut être amenée à la chambre de combustion (4), la chambre de combustion (4) étant adaptée, pour oxyder la partie (20) du mélange gazeux (2) amené dans la chambre de combustion (4), et une sortie de la chambre de combustion (4) débouchant dans une amenée du réacteur (3) pour l'ammoniac (1) amené en tant que matière première, de telle sorte que des gaz d'échappement chauds de la chambre de combustion (4) en amont du réacteur (3) peuvent être mélangés avec l'ammoniac (1) amené en tant que matière première en un mélange chaud (12) et le mélange chaud (12) peut être amené au réacteur (3).

2. Dispositif selon la revendication 1, **caractérisé en ce que** la chambre de combustion (4) présente un volume permettant d'assurer un temps de séjour dans la chambre de combustion (4) de telle sorte qu'un oxygène amené soit converti, le temps de séjour étant de préférence d'au moins 10 ms.

3. Dispositif selon la revendication 1 ou 2, **caractérisé en ce qu'**il est prévu un premier appareil de commande au moyen duquel un rapport mélange gazeux/air vers la chambre de combustion (4) peut être réglé de manière sous-stœchiométrique.

4. Dispositif selon la revendication 1, 2 ou 3, **caractérisé en ce qu'**il est prévu un deuxième appareil de commande qui est adapté pour maintenir au moins essentiellement constant un pouvoir calorifique du mélange gazeux (2) produit au moyen du réacteur (3) lors d'une modification d'un besoin du mélange gazeux (2), une quantité d'ammoniac de l'ammoniac (1) amené en tant que matière première, une quantité de mélange gazeux amené à la chambre de combustion (4) et/ou une quantité d'air ou d'oxygène amenée à la chambre de combustion (4) pouvant être réglées proportionnellement au moyen de l'appareil de commande lors d'une modification d'un besoin du mélange gazeux (2).

5. Dispositif selon l'une quelconque des revendications 1 à 4, **caractérisé en ce qu'**il est prévu un échangeur de chaleur (6), l'ammoniac (1) amené en tant que substance de départ pouvant être chauffé dans l'échangeur de chaleur (6) avant un mélange avec le gaz d'échappement chaud au moyen du mélange gazeux (2) s'écoulant du réacteur (3).

6. Dispositif selon l'une quelconque des revendications 1 à 5, **caractérisé en ce qu'**une conduite de processus est effectuée au moyen d'un troisième appareil de commande, de telle sorte que la partie (20) du mélange gazeux (2) s'écoulant du réacteur, qui est amenée à la chambre de combustion (4), représente au maximum 10 % du mélange gazeux s'écoulant (2).

7. Dispositif selon l'une quelconque des revendications 1 à 6, **caractérisé en ce que** la sortie de la chambre de combustion (4) présente une pluralité de buses de sortie (41).

8. Dispositif selon l'une quelconque des revendications 1 à 7, **caractérisé en ce qu'**il est prévu un chauffage électrique (7, 8), le chauffage électrique (7, 8) étant adapté pour chauffer le réacteur (3) et/ou l'ammoniac (1) amené en tant que matière première en amont du réacteur (3) dans un mode de fonctionnement démarrage et d'attente et/ou pour un mode de fonctionnement hybride.

9. Dispositif selon l'une quelconque des revendications 1 à 8, **caractérisé en ce qu'**un boîtier (42) de la chambre de combustion (4) est constitué d'un matériau céramique et/ou le boîtier (42) de la chambre de combustion (4) présente un revêtement céramique et/ou **en ce que** la chambre de combustion (4) et/ou le réacteur (3) sont conçus pour un mode de fonctionnement en surpression et/ou **en ce que**, dans une amenée pour la chambre de combustion, il est prévu un injecteur qui est adapté pour aspirer le mélange gazeux vers la chambre de combustion au moyen de l'air amené ou de l'oxygène amené.

10. Procédé de conversion partielle d'ammoniac en un mélange gazeux (2) combustible contenant de l'hydrogène, avec une proportion d'ammoniac, un ammoniac (1) amené en tant que matière première étant partiellement décomposé au moyen d'un réacteur (3) à une température de réaction de 500 °C à 900 °C en hydrogène et en azote pour produire le mélange gazeux (2),
**caractérisé en ce que**, dans une chambre de combustion (4), une partie (20) du mélange gazeux (2) s'écoulant du réacteur (3) est oxydée avec de l'air ou de l'oxygène, un gaz d'échappement chaud de la chambre de combustion (4) est mélangé en amont du réacteur (3) avec l'ammoniac (1) amené en tant que matière première en un mélange chaud et le mélange chaud est amené au réacteur (3).

11. Procédé selon la revendication 10, **caractérisé en ce qu'**un temps de séjour dans la chambre de combustion (4) est choisi de telle sorte qu'un oxygène amené à la chambre de combustion (4) soit converti, de préférence complètement converti, un temps de séjour étant de préférence d'au moins 10 ms.

12. Procédé selon la revendication 10 ou 11, **caractérisé en ce qu'**un rapport mélange gazeux/air vers la chambre de combustion est réglé de manière sous-stœchiométrique.

13. Procédé selon la revendication 10, 11 ou 12, **caractérisé en ce qu'**un pouvoir calorifique du mélange gazeux (2) produit est maintenu au moins essentiellement constant, une quantité d'ammoniac de l'ammoniac (1) amené en tant que matière première, une quantité de mélange gazeux amené à la chambre de combustion (4) et/ou une quantité d'air ou d'oxygène amené à la chambre de combustion (4) étant réglées proportionnellement lors d'une modification d'un besoin du mélange gazeux (2).

14. Procédé selon l'une quelconque des revendications 10 à 13, **caractérisé en ce que** l'ammoniac (1) amené en tant que matière première est chauffé avant un mélange avec le gaz d'échappement chaud au moyen du mélange gazeux (2) s'écoulant du réacteur (3).

15. Procédé selon l'une quelconque des revendications 10 à 14, **caractérisé en ce que** la partie (20) du mélange gazeux (2) s'écoulant du réacteur (3) qui est amenée à la chambre de combustion (4) représente au maximum 10 % du mélange gazeux s'écoulant.
